# EUROPÄISCHE PATENTSCHRIFT

(11) **EP 3 763 561 B1**
(45) Veröffentlichungstag und Bekanntmachung des Hinweises auf die Patenterteilung: **22.03.2023**
(21) Anmeldenummer: 20182904.1
(22) Anmeldetag: 29.06.2020
(51) Int. Cl.: B60N 2/16, B60N 2/50

(54) **FAHRZEUGSITZ MIT SCHERENGESTELL**
VEHICLE SEAT WITH FRAME
SIÈGE DE VÉHICULE POURVU DE STRUCTURE EN CISEAUX

(30) Priorität: 09.07.2019 DE 102019118514
(43) Veröffentlichungstag der Anmeldung: 13.01.2021
(73) Patentinhaber: GRAMMER AG, 92289 Ursensollen (DE)
(72) Erfinder: Haller, Erwin, 92262 Birgland (DE)
(74) Vertreter: Hannke, Christian

(56) Entgegenhaltungen:
- DE-A1- 10 206 223
- JP-A- H09 323 896

## Beschreibung

Die Erfindung betrifft einen Fahrzeugsitz mit einem Oberteil, welches gegenüber einem Unterteil mittels mindestens eines Scherengestells höhenverstellbar gelagert ist, wobei das Scherengestell ein erstes Scherenarmelement und ein zweites Scherenarmelement umfasst, welche um eine gemeinsame Achse schwenkbar gelagert sind, wobei das erste Scherenarmelement ein erstes, ein zweites und ein drittes Hebelelement umfasst, welche in Reihe hintereinandergeschaltet sind, wobei das erste Hebelelement gegenüber dem Oberteil um eine dritte Achse schwenkbar gelagert ist, und wobei das dritte Hebelelement gegenüber dem Unterteil um eine vierte Achse schwenkbar gelagert ist, wobei das zweite Hebelelement um die gemeinsame Achse schwenkbar gelagert sowie mittels einer fünften Achse drehbar mit dem ersten Hebelelement und mittels einer sechsten Achse drehbar mit dem dritten Hebelelement verbunden ist, gemäß dem Oberbegriff des Anspruchs 1.

Die vorliegende Erfindung basiert demnach auf der Kinematik eines Scherensystems. Gattungsgemäße Fahrzeugsitze, insbesondere für Nutzkraftfahrzeuge und speziell für landwirtschaftliche Nutzkraftfahrzeuge, sind aus dem Stand der Technik bereits bekannt. Ebenfalls bekannt sind gattungsgemäße Scherengestelle, welche nicht nur als Höheneinstellung eines Sitzes in einem Kraftfahrzeug, sondern auch als Federung des Sitzes dienen, um insbesondere den Sitzkomfort für einen Fahrzeugführer zu erhöhen bzw. einen guten Sitzkomfort zu gewährleisten, beispielsweise wenn das Fahrzeug auf unebenem Untergrund bewegt wird.

Derartige Scherengestelle umfassen wie oben beschrieben ein erstes Scherenarmelement und ein zweites Scherenarmelement, welche um eine gemeinsame Achse schwenkbar gelagert sind. Eines der Enden der Scherenarmelemente ist mit dem Oberteil und das andere der Enden der Scherenarmelemente ist mit dem Unterteil des Fahrzeugsitzes jeweils drehbar verbunden. Zusätzlich können Federelemente und/oder Dämpferelemente zwischen dem Oberteil, dem Unterteil und/oder dem Scherengestell angeordnet sein.

Dokument DE 102 06 223 A1 offenbart ein solches Scherengestell mit einem ersten und einem zweiten Scherenarmelement, die über eine gemeinsame Achse miteinander schwenkbar gelagert sind. Das erste Scherenarmelement umfasst dabei ein erstes, ein zweites und ein drittes Hebelelement, welche in Reihe hintereinandergeschaltet sind, wobei das erste Hebelelement gegenüber dem Oberteil um eine dritte Achse schwenkbar gelagert ist, das dritte Hebelelement gegenüber dem Unterteil um eine vierte Achse schwenkbar gelagert ist, das zweite Hebelelement um die gemeinsame Achse schwenkbar gelagert sowie mittels einer fünften Achse drehbar mit dem ersten Hebelelement und mittels einer sechsten Achse drehbar mit dem dritten Hebelelement verbunden ist. Das zweite Scherenarmelement umfasst dabei ein viertes Hebelelement, das mit dem Unterteil über die siebte Achse und über die gemeinsame Achse mit dem zweiten Hebelelement schwenkbar gelagert ist, sowie ein fünftes Hebelelement, das mit dem Oberteil und über eine sechste Achse mit dem vierten Hebelelement schwenkbar gelagert ist. Das Scherengestell weist dabei zusätzlich eine Federeinrichtung mit einem ersten und einem zweiten Federelement auf, wobei das erste Federelement mit dem Oberteil und dem ersten Hebelelement, sowie das zweite Federelement mit dem Oberteil und dem fünften Hebelelement verbunden ist.

Gemäß dem Stand der Technik sind beispielsweise in Sitzlängsrichtung vorne das erste Ende des ersten Scherenarmelements mittels eines Festlagers mit dem Oberteil und das erste Ende des zweiten Scherenarmelements mittels eines Festlagers mit dem Unterteil verbunden. Beispielsweise sind in Sitzlängsrichtung hinten das zweite Ende des ersten Scherenarmelements mittels eines Loslagers mit dem Unterteil und das zweite Ende des zweiten Scherenarmelements mittels eines Loslagers mit dem Oberteil verbunden. Bekannte Systeme verwenden zum Ausgleich der Bewegung in Sitzlängsrichtung beim Hub in Sitzhöhenrichtung Loslager in Form von Gleitern oder Rollen. Vorteil dieser gleit- oder rollengeführten Systeme sind die niedrigen Herstellkosten. Allerdings liegt der Nachteil dieser Systeme im für leichtgängige Systeme erforderlichen Minimalspiel, welches sich in der Praxis negativ bemerkbar macht.

Bekannt sind auch Scherenfederungen mit Linearführungen. Diese sind zwar qualitativ hochwertig, weisen aber auch entsprechend hohe Herstellkosten auf.

Weiter ist die Ausführung eines Scherengestells mit einer einseitigen Anordnung von zwei Gelenken für den Ausgleich in Sitzlängsrichtung bekannt. Die beiden Scherenarmelemente umfassen also beispielsweise jeweils zwei Hebelarme, welche hintereinandergeschaltet und mittels eines Drehgelenks miteinander verbunden sind. Diese Gelenke oder Drehgelenke sind gemäß dem Stand der Technik in Sitzlängsrichtung betrachtet entweder beide vorne oder beide hinten angeordnet. Die Festlager befinden sich hierbei auf der Seite der Drehgelenke.

Ein Vorteil dieser Systeme liegt in der höheren Steifigkeit und Langlebigkeit der Baugruppe. Nachteil hierbei sind jedoch die höheren Herstellkosten. Zudem können mit einseitig platzierten Gelenken keine planparallelen Vertikalbewegungen zwischen dem Oberteil und dem Unterteil ausgeführt werden. Außerdem verändert sich mit der Stellung der Scherenarme zueinander stets der Abstand zwischen den Bedienelementen, welche vor dem Fahrzeugsitz angeordnet und von der Hand des Fahrers ergriffen werden (Beispiel: Lenkrad), und dem Schultergelenk des Fahrers, so dass der Fahrer diese Änderung ständig durch eine entsprechende Bewegung seines Körpers ausgleichen muss.

Es ist daher Aufgabe der vorliegenden Erfindung, ein Fahrzeugsitz mit einem Scherengestell zu entwickeln, welches eine kostengünstige und gleichzeitig ergonomische Lösung bietet.

Die Aufgabe der Erfindung wird gelöst von einem Fahrzeugsitz mit einem Oberteil, welches gegenüber einem Unterteil mittels mindestens eines Scherengestells höhenverstellbar gelagert ist, wobei das Scherengestell ein erstes Scherenarmelement und ein zweites Scherenarmelement umfasst, welche um eine gemeinsame Achse schwenkbar gelagert sind, wobei das zweite Scherenarmelement ein einstückiges viertes Hebelelement umfasst, welches gegenüber dem Oberteil um eine erste Achse und gegenüber dem Unterteil um eine zweite Achse schwenkbar gelagert ist, wobei das zweite Scherenarmelement zwischen der ersten Achse und der zweiten Achse frei von Drehgelenken und in sich starr ausgestaltet ist und direkt das Unterteil mit dem Oberteil verbindet, wobei das erste Scherenarmelement ein erstes, ein zweites und ein drittes Hebelelement umfasst, welche in Reihe hintereinander geschaltet sind, wobei das erste Hebelelement gegenüber dem Oberteil um eine dritte Achse schwenkbar gelagert ist, und wobei das dritte Hebelelement gegenüber dem Unterteil um eine vierte Achse schwenkbar gelagert ist, wobei das zweite Hebelelement um die gemeinsame Achse schwenkbar gelagert sowie mittels einer fünften Achse drehbar mit dem ersten Hebelelement und mittels einer sechsten Achse drehbar mit dem dritten Hebelelement verbunden ist.

Das erste Scherenarmelement wird also durch ein erstes, ein zweites und ein drittes Hebelelement, welche in Reihe hintereinandergeschaltet sind, ausgestaltet. Der Unterschied der vorliegenden Erfindung gegenüber dem Stand der Technik liegt also darin, dass die Drehgelenke, welche wie oben beschrieben durch die fünfte und die sechste Achse ausgestaltet sind, beide am gleichen Scherenarmelement angeordnet sind. Diese beiden Drehgelenke liegen sich bezogen auf die gemeinsame Achse diagonal gegenüber und sind für den bei einer Höhenverstellung des Scherengestells erforderlichen Ausgleich in Längsrichtung des Fahrzeugsitzes zuständig. Außerdem ist die Kinematik der Federung oder Höhenverstellung des Oberteils und des Unterteils durch die Drehgelenke mechanisch eindeutig bestimmt. Bevorzugt ist das erste Scherenarmelement bis auf die fünfte und sechste Achse und bis auf die Anbindung an das Oberteil mittels der dritten Achse und die Anbindung an das Unterteil mittels der vierten Achse ansonsten frei von weiteren Drehgelenken.

Bevorzugt sind die erste, zweite, dritte, vierte, fünfte und sechste Achse sowie die gemeinsame Achse alle parallel zueinander und/oder parallel zur Breitenrichtung des Sitzes verlaufend angeordnet.

Es sei darauf hingewiesen, dass im Sinne der vorliegenden Erfindung die Positionsangaben (beispielsweise vorne, hinten, oben, unten, links, rechts etc.) und Richtungsangaben (Höhenrichtung, Längsrichtung, Breitenrichtung) immer in Bezug auf den Fahrzeugsitz definiert sind. Globale Einflüsse, wie zum Beispiel eine Hangabwärtsfahrt eines den Fahrzeugsitz umfassenden Fahrzeugs und eine dadurch resultierenden Auslenkung des Fahrzeugsitzes sind hingegen nicht relevant.

Das zweite Scherenarmelement zwischen der ersten und der zweiten Achse ist im Gegensatz zum ersten Scherenarmelement wie beschrieben frei von Drehgelenken ausgestaltet und verbindet als einstückiges, in sich starres Bauteil direkt das Unterteil mit dem Oberteil.

Erfindungsgemäß sind demnach die Verbindungen des Scherengestells zum Oberteil und zum Unterteil jeweils frei von translatorischen Freiheitsgraden. Bevorzugt weisen die Verbindungen demnach lediglich jeweils einen rotativen Freiheitsgrad auf. Dieser rotative Freiheitsgrad ist jeweils mittels eines der Drehlager, welche durch die erste, die zweite, die dritte und die vierte Achse ausgestaltet sind, und mittels welchen die beiden Scherenarmelemente wie oben beschrieben mit dem Oberteil und mit dem Unterteil verbunden sind, ausgestaltet. Die Verbindungen des Scherengestells zum Oberteil und zum Unterteil sind also bevorzugt ausschließlich mittels Festlagern ausgestaltet.

Der Vorteil der Erfindung ist, dass der Bewegungsablauf dieser Scherenfederung mit diagonal angeordneten Gelenken so konzipiert ist, dass der Abstand zwischen dem Schultergelenk und dem Kontaktbereich der Hand des Fahrers mit den Bedienelementen in allen Stellungen der Scherenarme zueinander keine oder nur eine geringe Änderung erfährt.

Bevorzugt umfasst ein Fahrzeugsitz genau zwei derartige Scherengestelle, welche in Sitzbreitenrichtung beabstandet zueinander angeordnet sind. Bevorzugt sind beide Scherengestelle zu einer virtuellen Ebene, welche parallel zu einer Längsrichtung und zu einer Höhenrichtung des Fahrzeugsitzes angeordnet ist, spiegelsymmetrisch angeordnet.

Gemäß einer vorteilhaften Ausführungsform ist es vorgesehen, dass in Bezug auf eine Längsrichtung des Fahrzeugsitzes die dritte Achse und die zweite Achse an einem vorderen Ende des Fahrzeugsitzes angeordnet sind. Mittels dieser Mechanik ist bevorzugt gewährleistet, dass sich das Oberteil bei einer Bewegung in Richtung zum Unterteil hin (also nach unten) gleichzeitig in Längsrichtung des Fahrzeugsitzes gesehen nach hinten bewegt. Analog dazu bewegt sich das Oberteil bei einer Bewegung in Richtung vom Unterteil weg (also nach oben) gleichzeitig in Längsrichtung des Fahrzeugsitzes gesehen nach vorne.

Um eine ausreichend große Verschwenkung der Mechanik gewährleisten zu können, hat es sich bewährt, wenn das vierte Hebelelement länger ist als das zweite Hebelelement und/oder wenn das zweite Hebelelement länger ist als das erste Hebelelement und/oder wenn das zweite Hebelelement länger ist als das dritte Hebelelement.

Weiterhin ist es vorteilhaft, wenn ein erster Abstand zwischen der dritten Achse und der fünften Achse identisch ist zu einem zweiten Abstand zwischen der vierten Achse und der sechsten Achse. Es ist also vorteilhaft eine Länge des ersten Hebelelements gleich groß wie eine Länge des dritten Hebelelements. Bevorzugt ist das erste Hebelelement identisch zum dritten Hebelelement ausgestaltet. Dies sorgt dafür, dass baugleiche Teile verwendet werden können, was die Kosten reduziert.

Außerdem ist es vorteilhaft, wenn ein dritter Abstand zwischen der dritten Achse und der vierten Achse kleiner ist als ein vierter Abstand zwischen der ersten Achse und der zweiten Achse. Es ist also bevorzugt, dass die Dreiteilung des ersten Scherenarmelements bei der Auswahl der Abstände der Achsen berücksichtigt wird, so dass das Oberteil und das Unterteil zumindest im nicht-ausgelenkten Grundzustand des Scherengestells parallel zueinander angeordnet sein können.

Im Sinne der vorliegenden Erfindung kann das Scherengestell ausgehend vom nicht-ausgelenkten Grundzustand um eine Distanz nach oben ausgelenkt werden, um einen ersten Maximalzustand zu erreichen, welcher durch einen größtmöglichen Abstand zwischen dem Oberteil und dem Unterteil definiert ist. Ferner kann das Scherengestell ausgehend vom nicht-ausgelenkten Grundzustand um die gleiche Distanz nach unten ausgelenkt werden, um einen zweiten Maximalzustand zu erreichen, welcher durch einen geringstmöglichen Abstand zwischen dem Oberteil und dem Unterteil definiert ist.

Außerdem ist es vorteilhaft, wenn in Bezug auf eine Höhenrichtung des Fahrzeugsitzes eine Position der ersten Achse identisch zu einer Position der dritten Achse und/oder eine Position der zweiten Achse identisch zu einer Position der vierten Achse ist. Mit anderen Worten sind also die beiden Achsen, welche als Anbindung des Scherengestells an das Oberteil dienen, und die beiden Achsen, welche als Anbindung des Scherengestells an das Unterteil dienen, jeweils miteinander auf der gleichen Höhe angeordnet. Bezogen auf die erste und die dritte Achse gilt dies vorteilhaft zumindest im nicht-ausgelenkten Grundzustand des Scherengestells. Ist das Scherengestell ein paralleles Scherengestell, so gilt dies unabhängig vom Zustand des Scherengestells bezüglich einer Verschwenkung um die gemeinsame Achse.

Ferner ist es bevorzugt, wenn eine Relativposition der dritten Achse, der vierten Achse, der fünften Achse und/oder der sechsten Achse jeweils zur gemeinsamen Achse in Längsrichtung und/oder in Höhenrichtung des Fahrzeugsitzes verstellbar ist. Beispielsweise ist hierfür jeweils eine Verstelleinheit angeordnet, mittels welcher die entsprechende Relativposition veränderbar ist. Damit sind die Schwingungscharakteristika des Scherengestells individuell anpassbar.

Eine weitere bevorzugte Ausführungsform sieht vor, dass in Bezug auf die Längsrichtung des Fahrzeugsitzes eine Position der ersten Achse unterschiedlich zu einer Position der vierten Achse und/oder eine Position der dritten Achse unterschiedlich zu einer Position der zweiten Achse ist. Damit wird dem Unterschied zwischen dem ersten Scherenarmelement und dem zweiten Scherenarmelement Rechnung getragen.

Außerdem ist bevorzugt ein fünfter Abstand zwischen der fünften Achse und der gemeinsamen Achse identisch zu einem sechsten Abstand zwischen der sechsten Achse und der gemeinsamen Achse. Damit ist beschrieben, dass das zweite Hebelelement in Bezug auf seine Längserstreckung bevorzugt genau mittig um die gemeinsame Achse gelagert ist.

Ferner ist bevorzugt ein siebter Abstand zwischen der ersten Achse und der gemeinsamen Achse identisch zu einem achten Abstand zwischen der zweiten Achse und der gemeinsamen Achse. Damit ist beschrieben, dass das vierte Hebelelement in Bezug auf seine Längserstreckung bevorzugt genau mittig um die gemeinsame Achse gelagert ist.

Für die vorliegende Erfindung sind nun insbesondere zwei Ausführungsformen bevorzugt.

Eine erste bevorzugte Ausführungsform sieht vor, dass bei einer Schwingung des Scherengestells, also einer Verdrehung der Scherenarmelemente um die gemeinsame Achse, eine Verbindungslinie zwischen der ersten und der dritten Achse unabhängig von der momentanen Stellung der Scherenarmelemente zueinander stets parallel zu einer Grundposition der Verbindungslinie abbildbar ist. Beispielsweise ist diese Verbindungslinie stets parallel zur Längsrichtung des Fahrzeugsitzes und/oder zu einer Verbindungslinie zwischen der zweiten und der vierten Achse angeordnet. Damit ist beschrieben, dass die Schwingung des Scherengestells eine Änderung der Position der Verbindungslinie zwischen der ersten und der dritten Achse lediglich in Bezug auf eine reine Translation in Längsrichtung und in Höhenrichtung des Fahrzeugsitzes bewirkt. Diese erste Ausführungsform wird im Sinne der vorliegenden Erfindung als "paralleles Scherengestell" bezeichnet.

Ein paralleles Scherengestell liegt beispielsweise dann vor, wenn dieses eine Punktsymmetrie bezüglich eines Symmetriepunktes aufweist, wobei der Symmetriepunkt durch die gemeinsame Achse ausgestaltet ist. Betrachtet wird diese Punktsymmetrie in einer Ebene, welche durch die Längsrichtung und die Höhenrichtung des Fahrzeugsitzes aufgespannt ist. Beispielsweise ist bei einem parallelen Scherengestell ein neunter Abstand zwischen der ersten Achse und der dritten Achse gleich groß wie ein zehnter Abstand zwischen der zweiten Achse und der vierten Achse.

Eine zweite bevorzugte Ausführungsform sieht vor, dass bei der Schwingung des Scherengestells die Verbindungslinie zwischen der ersten und der dritten Achse abhängig von der momentanen Stellung der Scherenarmelemente zueinander mit einem veränderlichen Neigungsgrad zur Verbindungslinie zwischen der zweiten und der vierten Achse angeordnet ist.

Damit ist beschrieben, dass die Schwingung des Scherengestells eine Änderung der Position der Verbindungslinie zwischen der ersten und der dritten Achse in Bezug auf eine Translation in Längsrichtung und in Höhenrichtung des Fahrzeugsitzes sowie in Bezug auf eine Rotation um eine in Breitenrichtung des Sitzes verlaufende virtuelle Achse bewirkt. Diese zweite Ausführungsform wird im Sinne der vorliegenden Erfindung als "nicht-paralleles Scherengestell" bezeichnet.

Ein nicht-paralleles Scherengestell liegt beispielsweise dann vor, wenn dieses zumindest in seinem Grundzustand keine Punktsymmetrie bezüglich des Symmetriepunktes aufweist, welcher durch die gemeinsame Achse ausgestaltet ist. Betrachtet wird diese Punktsymmetrie in einer Ebene, welche durch die Längsrichtung und die Höhenrichtung des Fahrzeugsitzes aufgespannt ist.

Es wird angenommen, dass die Verbindungslinie zwischen der ersten und der dritten Achse bevorzugt parallel zu einer Sitzfläche ausgerichtet ist. Gemäß der ersten Ausführungsform erfährt die Sitzfläche also lediglich eine Verschiebung und gemäß der zweiten Ausführungsform zusätzlich eine Änderung ihres Neigungsgrades.

Weitere Vorteile, Ziele und Eigenschaften vorliegender Erfindung werden anhand anliegender Zeichnung und nachfolgender Beschreibung erläutert, in welchen ein Fahrzeugsitz beispielhaft mit unterschiedlich ausgestalteten Führungseinrichtungen dargestellt und beschrieben ist.

In der Zeichnung zeigen:
- Figur 1: eine perspektivische Ansicht eines Scherengestells für einen Fahrzeugsitzes in einer zweiten Maximalposition;
- Figur 2: eine Seitenansicht des Scherengestells gemäß der Fig. 1 in einer ersten Maximalposition;
- Figur 3: eine Draufsicht des Scherengestells gemäß der Fig. 1;
- Figur 4: einen Querschnitt des Scherengestells gemäß der Fig. 3;
- Figur 5: die Ansicht gemäß der Fig. 2 überlagert von einer Seitenansicht des Scherengestells gemäß der Fig. 1;
- Figur 6a, 6b, 6c: Darstellungen einer Fahrzeugkabine und einem Fahrzeugsitz in verschiedenen Höhenpositionen;
- Fig. 7a; 7b: schematische Darstellungen der Kinematik einer ersten Ausführungsform der vorliegenden Erfindung;
- Fig. 8a; 8b: schematische Darstellungen der Kinematik einer zweiten Ausführungsform der vorliegenden Erfindung;
- Fig. 9a; 9b: schematische Darstellungen der Kinematik einer dritten und einer vierten Ausführungsform der vorliegenden Erfindung.

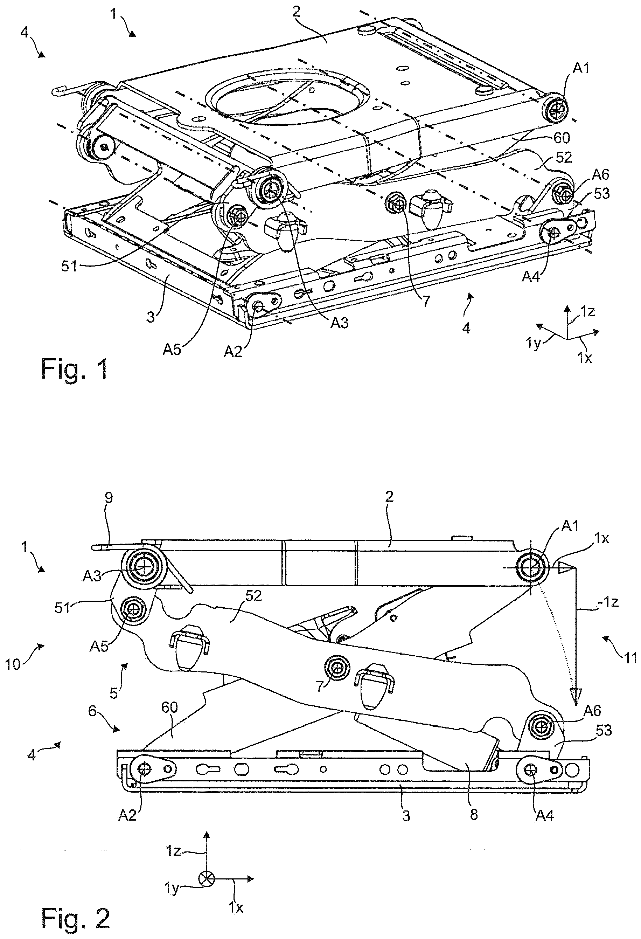

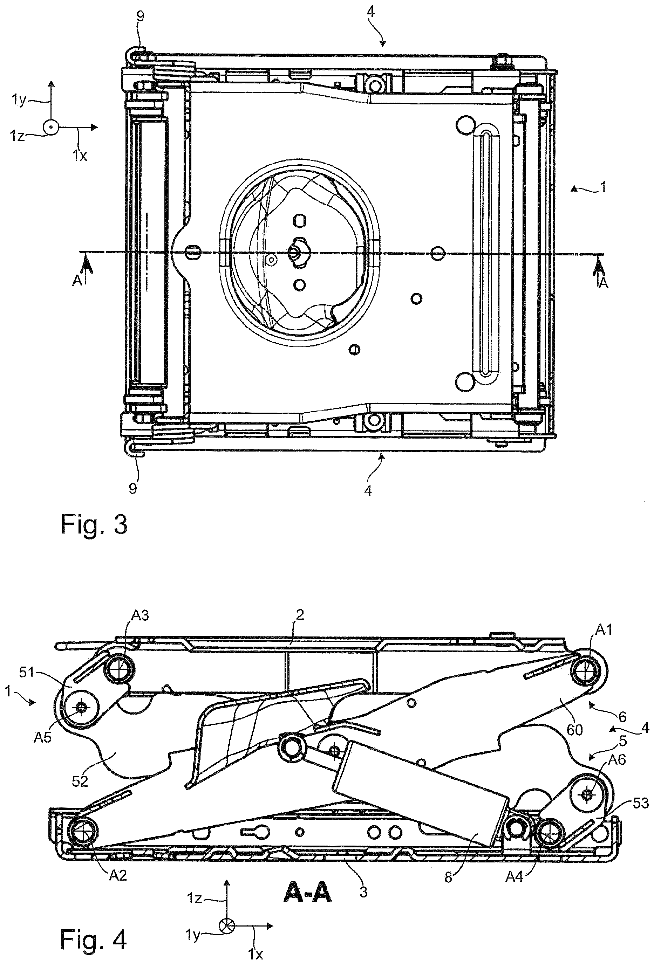

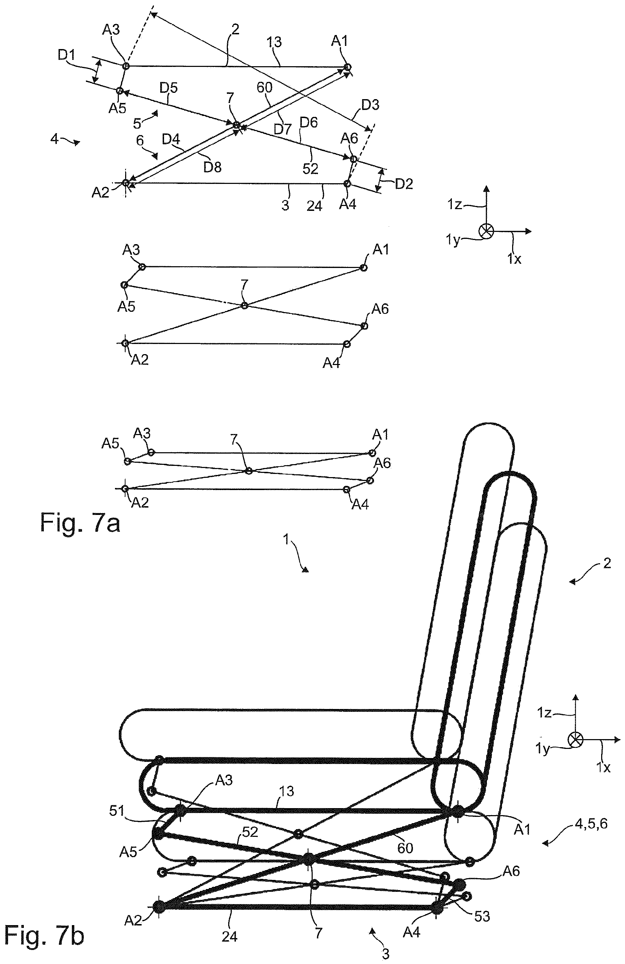

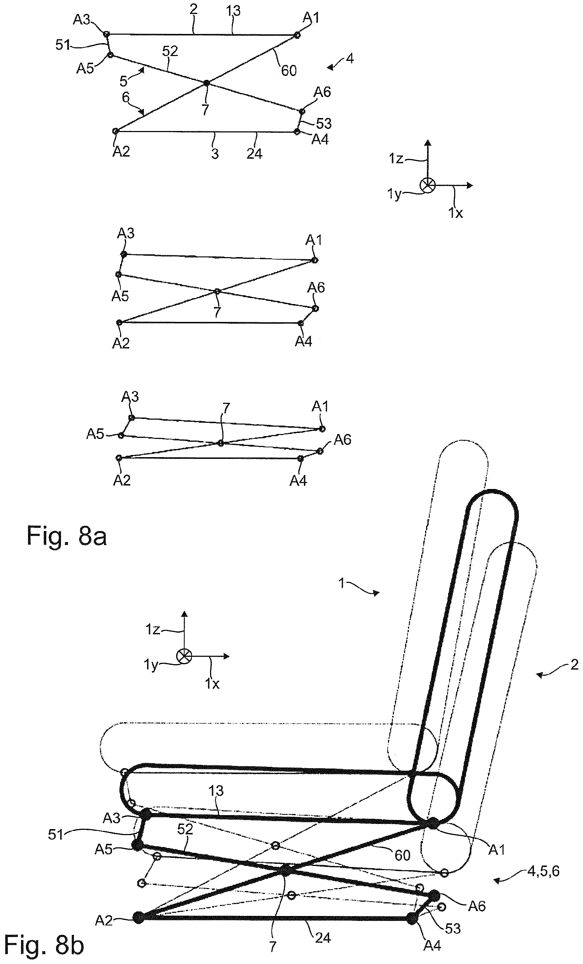

Es sei erwähnt, dass zur besseren Übersichtlichkeit in manchen Figuren einige Komponenten nicht dargestellt sind. So zeigen die Figuren 1 bis 4 kein Sitzteil und keine Rückenlehne des Fahrzeugsitzes 1. Gemäß den Figuren 7a und 8a ist jeweils nur die oberste Darstellung mit allen Bezugszeichen versehen; die beiden unteren Darstellungen weisen jeweils nur die Bezugszeichen der Achsen A1 bis 7 auf. Gemäß den Figuren 7b und 8b ist jeweils nur der Grundzustand des Fahrzeugsitzes 1 (mittlerer, jeweils mit fetten Linien dargestellter Zustand des Scherengestells 4 in Bezug auf den Abstand zwischen dem Oberteil 2 und dem Unterteil 3) mit Bezugszeichen versehen.

Außerdem sind die Abbildungen jeweils mit einem kartesischen Koordinatensystem versehen, welches die drei Achsen 1x (Längsrichtung des Fahrzeugsitzes 1 von vorne nach hinten entsprechend der Pfeilrichtung), 1y (Breitenrichtung des Fahrzeugsitzes 1 von links nach rechts entsprechend der Pfeilrichtung) sowie 1z (Höhenrichtung des Fahrzeugsitzes 1 von unten nach oben entsprechend der Pfeilrichtung) aufweist.

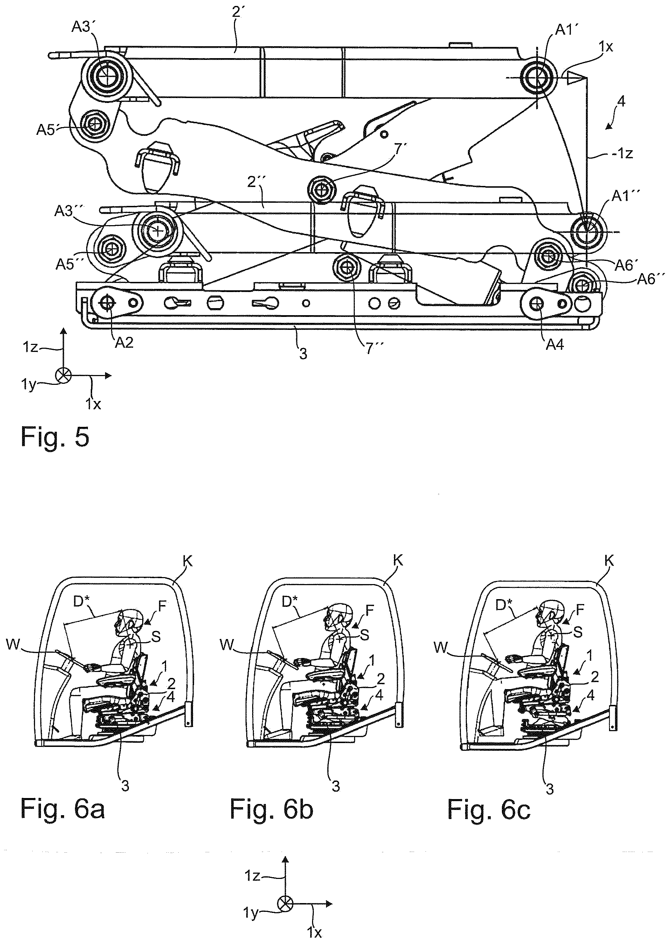

Die Figuren 6a-c, 7b und 8b zeigen einen erfindungsgemäßen Fahrzeugsitz 1 mit einem Oberteil 2, welches gegenüber einem Unterteil 3 mittels eines Scherengestells 4 höhenverstellbar gelagert ist. Ein weiteres Scherengestell 4 ist parallel zum ersten Scherengestell 4 angeordnet und gemäß Fig. 1 gezeigt. Zusätzlich sind vorliegend als Schenkelfedern ausgestaltete Federelemente 9 zwischen dem Oberteil 2 und dem Scherengestell 4 sowie ein als hydraulischer Dämpfer ausgestaltetes Dämpferelement 8 zwischen dem Unterteil 3 und dem Scherengestell 4 angeordnet.

Das Scherengestell 4 umfasst ein erstes Scherenarmelement 5 und ein zweites Scherenarmelement 6, welche um eine gemeinsame Achse 7 schwenkbar gelagert sind. Das zweite Scherenarmelement 6 umfasst ein einstückiges viertes Hebelelement 60, welches gegenüber dem Oberteil 2 um eine erste Achse A1 und gegenüber dem Unterteil 3 um eine zweite Achse A2 schwenkbar gelagert ist.

Das erste Scherenarmelement 5 umfasst ein erstes 51, ein zweites 52 und ein drittes Hebelelement 53, welche in Reihe hintereinandergeschaltet sind. Das erste Hebelelement 51 ist gegenüber dem Oberteil 2 um eine dritte Achse A3 schwenkbar gelagert. Das dritte Hebelelement 53 ist gegenüber dem Unterteil 3 um eine vierte Achse A4 schwenkbar gelagert. Das zweite Hebelelement 52 ist um die gemeinsame Achse 7 schwenkbar gelagert sowie um eine fünfte Achse A5 drehbar mit dem ersten Hebelelement 51 und um eine sechste Achse A6 drehbar mit dem dritten Hebelelement 53 verbunden.

Die Drehgelenke, welche wie oben beschrieben durch die fünfte A5 und die sechste Achse A6 ausgestaltet sind, sind beide am gleichen Scherenarmelement 5 angeordnet. Diese beiden Drehgelenke und damit die beiden Achsen A5 und A6 liegen sich bezogen auf die gemeinsame Achse 7 diagonal gegenüber.

Das zweite Scherenarmelement 6 zwischen der ersten A1 und der zweiten Achse A2 ist erfindungsgemäß und wie gezeigt frei von Drehgelenken und in sich starr ausgestaltet und verbindet direkt das Unterteil 3 mit dem Oberteil 2.

Die Verbindungen des Scherengestells 4 zum Oberteil 2 und zum Unterteil 3 sind jeweils frei von translatorischen Freiheitsgraden ausgestaltet und weisen lediglich jeweils einen rotativen Freiheitsgrad auf. Dieser rotative Freiheitsgrad ist jeweils mittels eines der Drehlager, welche durch die erste A1, die zweite A2, die dritte A3 und die vierte Achse A4 ausgestaltet sind, und mittels welchen die beiden Scherenarmelemente 5 und 6 wie oben beschrieben mit dem Oberteil 2 und mit dem Unterteil 3 verbunden sind, ausgestaltet. Die Verbindungen des Scherengestells 4 zum Oberteil 2 und zum Unterteil 3 sind vorliegend also ausschließlich mittels Festlagern ausgestaltet.

Der Vorteil der Erfindung ist, dass der Bewegungsablauf dieser Scherenfederung mit diagonal angeordneten Gelenken so konzipiert ist, dass der Abstand zwischen dem Schultergelenk und dem Kontaktbereich der Hand des Fahrers mit den Bedienelementen (im Folgenden als ergonomischer Abstand D* bezeichnet) in allen Stellungen der Scherenarme 5 und 6 zueinander keine oder nur eine geringe Änderung erfährt. Dies zeigt ein Vergleich der Figuren 6a, 6b und 6c, welche jeweils eine Fahrzeugkabine K mit einem erfindungsgemäßen Fahrzeugsitz 1, einem Fahrer F mit Schultergelenk S sowie einem als Lenkrad ausgestalteten Bedienelement W zeigen.

Gemäß der Fig. 6b befindet sich das Scherengestell 4 in einem nicht-ausgelenkten Grundzustand. Gemäß der Fig. 6a ist das Scherengestell 4 maximal eingefahren, so dass der geringstmögliche Abstand zwischen dem Oberteil 2 und dem Unterteil 3 ausgestaltet ist. Gemäß der Fig. 6c ist das Scherengestell 4 maximal ausgefahren, so dass der größtmögliche Abstand zwischen dem Oberteil 2 und dem Unterteil 3 ausgestaltet ist. In allen drei Stellungen des Scherengestells 4 ist gewährleistet, dass sich der ergonomische Abstand D* zwischen dem Bedienelement W und des Schultergelenks S des Fahrers F nicht oder nur geringfügig ändert.

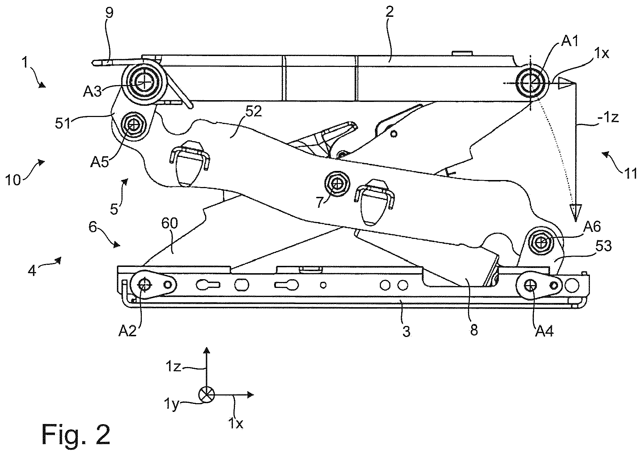

Gemäß der Fig. 2 ist deutlich gezeigt, dass in Bezug auf eine Längsrichtung 1x des Fahrzeugsitzes 1 die dritte Achse A3 und die zweite Achse A2 an einem vorderen Ende 10 des Fahrzeugsitzes 1 angeordnet sind (markiert ist auch noch das hintere Ende 11 des Fahrzeugsitzes 1). Mittels dieser Mechanik ist gewährleistet, dass sich das Oberteil 2 bei einer Bewegung in Richtung zum Unterteil 3 hin (also in Höhenrichtung 1z nach unten -1z) gleichzeitig in Längsrichtung 1x des Fahrzeugsitzes 1 gesehen nach hinten bewegt (siehe hierzu die zwei Pfeile gemäß Fig. 2, welche wie gemäß der Fig. 5 mit 1x und -1z markiert sind).

Die Fig. 2 und auch die schematischen Abbildungen gemäß den Fig. 7a bis 9b zeigen, dass das vierte Hebelelement 60 vorliegend länger ist als das zweite Hebelelement 52. Außerdem ist gezeigt, dass das zweite Hebelelement 52 vorliegend länger ist als das erste Hebelelement 51 und dass das zweite Hebelelement 52 vorliegend länger ist als das dritte Hebelelement 53.

Weiterhin ist gemäß der Fig. 7a (oberste Darstellung) gezeigt, dass ein erster Abstand D1 zwischen der dritten Achse A3 und der fünften Achse A5 identisch ist zu einem zweiten Abstand D2 zwischen der vierten Achse A4 und der sechsten Achse A6. Vorliegend ist eine Länge des ersten Hebelelements 51 gleich groß wie eine Länge des dritten Hebelelements 53. Vorliegend ist das erste Hebelelement 51 zudem identisch zum dritten Hebelelement 53 ausgestaltet.

Außerdem ist gezeigt, dass ein dritter Abstand D3 zwischen der dritten Achse A3 und der vierten Achse A4 kleiner ist als ein vierter Abstand D4 zwischen der ersten Achse A1 und der zweiten Achse A2.

Ferner ist gezeigt, dass in Bezug auf eine Höhenrichtung 1z des Fahrzeugsitzes 1 eine Position der ersten Achse A1 identisch zu einer Position der dritten Achse A3 und/oder eine Position der zweiten Achse A2 identisch zu einer Position der vierten Achse A4 ist. Mit anderen Worten sind also die beiden Achsen A1 und A3, welche als Anbindung des Scherengestells 4 an das Oberteil 2 dienen, und die beiden Achsen A2 und A4, welche als Anbindung des Scherengestells 4 an das Unterteil 3 dienen, auf gleicher Höhe angeordnet. Bezogen auf die erste A1 und die dritte Achse A3 gilt dies vorliegend zumindest im nicht-ausgelenkten Grundzustand des Scherengestells.

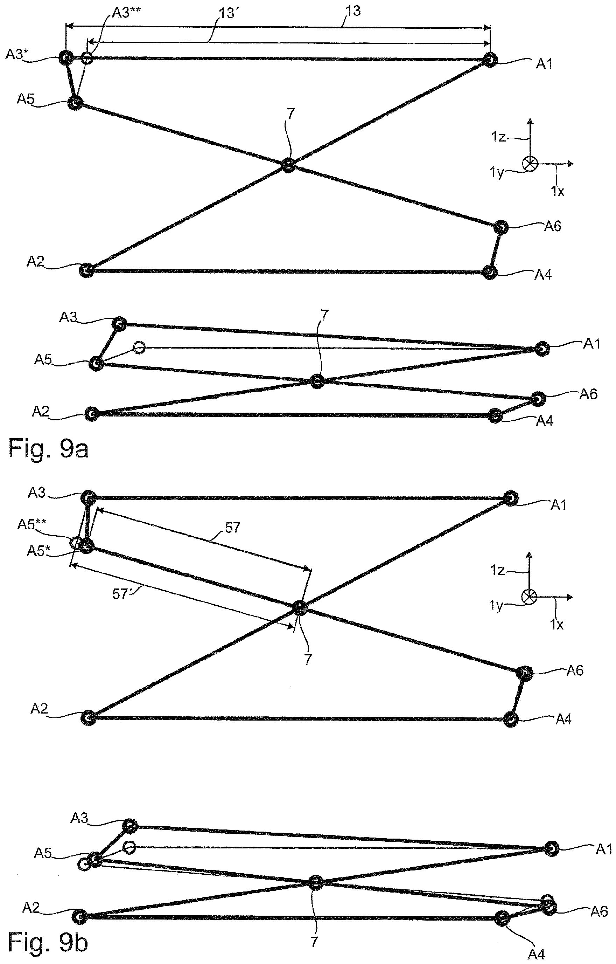

Ferner ist gemäß dem vorliegenden Scherengestell 4 eine Relativposition der dritten Achse A3 zur gemeinsamen Achse 7 in Längsrichtung 1x des Fahrzeugsitzes 1 verstellbar (siehe Vergleich der Positionen A3* und A3** und die resultierende Längenänderung der Verbindungslinie 13 zwischen den Achsen A1 und A3* zur Verbindungslinie 13' zwischen den Achsen A1 und A3** gemäß der oberen Darstellung der Fig. 9a).

Weiterhin ist gemäß dem vorliegenden Scherengestell 4 eine Relativposition der fünften Achse A5 zur gemeinsamen Achse 7 in Längsrichtung 1x und Höhenrichtung 1z des Fahrzeugsitzes 1 verstellbar (siehe Vergleich der Positionen A5* und A5** und die resultierende Längenänderung der Verbindungslinie 57 zwischen den Achsen 7 und A5* zur Verbindungslinie 57` zwischen den Achsen 7 und A5** gemäß der oberen Darstellung der Fig. 9b). Damit sind die Schwingungscharakteristika des Scherengestells 4 individuell anpassbar.

Ebenfalls gezeigt ist, dass in Bezug auf die Längsrichtung 1x des Fahrzeugsitzes 1 eine Position der ersten Achse A1 unterschiedlich zu einer Position der vierten Achse A4 und eine Position der dritten Achse A3 unterschiedlich zu einer Position der zweiten Achse A2 ist. Dies gilt insbesondere für den nicht ausgelenkten Zustand und für die parallele Ausführungsform (siehe Fig. 7a, 7b).

Außerdem ist vorliegend ein fünfter Abstand D5 zwischen der fünften Achse A5 und der gemeinsamen Achse 7 identisch zu einem sechsten Abstand D6 zwischen der sechsten Achse A6 und der gemeinsamen Achse 7. Damit ist beschrieben, dass das zweite Hebelelement 52 in Bezug auf seine Längserstreckung vorliegend genau mittig um die gemeinsame Achse 7 gelagert ist (siehe hierzu oberste Darstellung gemäß der Fig. 7a).

Ferner ist vorliegend ein siebter Abstand D7 zwischen der ersten Achse A1 und der gemeinsamen Achse 7 identisch zu einem achten Abstand D8 zwischen der zweiten Achse A2 und der gemeinsamen Achse 7. Damit ist beschrieben, dass das vierte Hebelelement 60 in Bezug auf seine Längserstreckung vorliegend genau mittig um die gemeinsame Achse gelagert ist (siehe hierzu oberste Darstellung gemäß der Fig. 7a).

Insbesondere die Figuren 7a, 7b und 8a, 8b zeigen nun zwei bevorzugte Ausführungsformen der vorliegenden Erfindung.

Die erste bevorzugte Ausführungsform ist gemäß den Figuren 7a und 7b gezeigt und wird im Sinne der vorliegenden Erfindung als "paralleles Scherengestell" bezeichnet. Sie sieht vor, dass bei einer Schwingung des Scherengestells 4, also einer Verdrehung der Scherenarmelemente 5 und 6 um die gemeinsame Achse 7, eine Verbindungslinie 13 zwischen der ersten A1 und der dritten Achse A3 unabhängig von der momentanen Stellung der Scherenarmelemente 5 und 6 zueinander stets parallel zu einer Grundposition der Verbindungslinie 13 abbildbar ist.

Gemäß den Figuren 7a und 7b ist diese Verbindungslinie 13 stets parallel zur Längsrichtung 1x des Fahrzeugsitzes 1 und zu einer Verbindungslinie 24 zwischen der zweiten A2 und der vierten Achse A4 angeordnet. Damit ist beschrieben, dass die Schwingung des Scherengestells 4 eine Änderung der Position der Verbindungslinie 13 lediglich in Bezug auf eine reine Translation in Längsrichtung 1x und in Höhenrichtung 1z des Fahrzeugsitzes 1 bewirkt. Dies ist deutlich zu sehen anhand eines Vergleichs der Zustände des Fahrzeugsitzes 1 gemäß der Fig. 7b, wonach sich die Sitzfläche stets parallel zur Längsrichtung 1x absenkt.

Beispielsweise bewegt sich die erste Achse A1 beim Durchlaufen einer Höhenänderung vom ersten Maximalzustand bis zum zweiten Maximalzustand um etwa 40 mm nach hinten und um etwa 120 mm nach unten (siehe hierzu Fig. 5 sowie die Positionen A1', A3', A5`, A6', 7` der entsprechenden Achsen A1, A3, A5, A6, 7 gemäß dem ersten Maximalzustand und die Positionen A1", A3", A5", A6", 7" der entsprechenden Achsen A1, A3, A5, A6, 7 gemäß dem zweiten Maximalzustand).

Das parallele Scherengestell 4 gemäß der Fig. 7a, 7b weist eine Punktsymmetrie bezüglich eines Symmetriepunktes auf, welcher durch die gemeinsame Achse 7 ausgestaltet ist. Betrachtet wird diese Punktsymmetrie in einer Ebene, welche durch die Längsrichtung 1x und die Höhenrichtung 1z des Fahrzeugsitzes 1 aufgespannt ist.

Die zweite bevorzugte Ausführungsform ist gemäß den Figuren 8a und 8b gezeigt und wird im Sinne der vorliegenden Erfindung als "nicht-paralleles Scherengestell" bezeichnet.

Insbesondere ein Vergleich der Zustände des Fahrzeugsitzes 1 gemäß der Fig. 8b zeigt, dass sich die Sitzfläche nicht parallel zur Längsrichtung 1x absenkt, sondern dass bei der Schwingung des Scherengestells 4 die Verbindungslinie 13 abhängig von der momentanen Stellung der Scherenarmelemente 5 und 6 zueinander mit einem veränderlichen Neigungsgrad zur Verbindungslinie 24 angeordnet ist. Damit ist beschrieben, dass die Schwingung des Scherengestells 4 eine Änderung der Position der Verbindungslinie 13 in Bezug auf eine Translation in Längsrichtung 1x und in Höhenrichtung 1z des Fahrzeugsitzes 1z sowie in Bezug auf eine Rotation um eine in Breitenrichtung 1y des Sitzes 1 verlaufende virtuelle Achse bewirkt.

Beispielsweise erfährt die Verbindungslinie 13 beim Durchlaufen einer Höhenänderung vom ersten Maximalzustand bis zum zweiten Maximalzustand eine Winkeländerung gegenüber der Verbindungslinie 24 von 3° oder mehr als 3° (beispielsweise von einem Wert von 0° in der ersten Maximalstellung zu einem Wert von 3° in der zweiten Maximalstellung).

Das nicht-parallele Scherengestell 4 gemäß den Fig. 8a und 8b weist keine Punktsymmetrie bezüglich des Symmetriepunktes auf, welcher durch die gemeinsame Achse 7 ausgestaltet ist. Betrachtet wird diese Punktsymmetrie in einer Ebene, welche durch die Längsrichtung 1x und die Höhenrichtung 1z des Fahrzeugsitzes 1 aufgespannt ist.

Es versteht sich, dass es sich bei den vorstehend erläuterten Ausführungsbeispielen lediglich um eine erste Ausgestaltung des erfindungsgemäßen Fahrzeugsitzes handelt. Insofern beschränkt sich die Ausgestaltung der Erfindung nicht auf diese Ausführungsbeispiele.

### Bezugszeichenliste

1 Fahrzeugsitz
1x Längsrichtung
1y Breitenrichtung
1z Höhenrichtung
-1z Richtung nach unten
2 Oberteil
3 Unterteil
4 Scherengestell
5, 6 Scherenarmelement
7, A1, ..., A6 Achse
8 Dämpferelement
9 Federelement
10, 11 Ende
13, 13', 24, 57, 57' Verbindungslinie
51, 52, 53, 60 Hebelelement
A1', A1", A3', A3", A5', A5", A6', A6", A3*, A3**, A5*, A5**, 7', 7" Position
D1, ..., D8 Abstand
D* ergonomischer Abstand
F Fahrer
K Fahrzeugkabine
S Schultergelenk
W Bedienelement

## Patentansprüche

1. Fahrzeugsitz (1) mit einem Oberteil (2), welches gegenüber einem Unterteil (3) mittels mindestens eines Scherengestells (4) höhenverstellbar gelagert ist, wobei das Scherengestell (4) ein erstes Scherenarmelement (5) und ein zweites Scherenarmelement (6) umfasst, welche um eine gemeinsame Achse (7) schwenkbar gelagert sind, wobei
das erste Scherenarmelement (5) ein erstes (51), ein zweites (52) und ein drittes Hebelelement (53) umfasst, welche in Reihe hintereinandergeschaltet sind, wobei das erste Hebelelement (51) gegenüber dem Oberteil (2) um eine dritte Achse (A3) schwenkbar gelagert ist, und wobei das dritte Hebelelement (53) gegenüber dem Unterteil (3) um eine vierte Achse (A4) schwenkbar gelagert ist, wobei das zweite Hebelelement (52) um die gemeinsame Achse (7) schwenkbar gelagert sowie mittels einer fünften Achse (A5) drehbar mit dem ersten Hebelelement (51) und mittels einer sechsten Achse (A6) drehbar mit dem dritten Hebelelement (53) verbunden ist,
**dadurch gekennzeichnet, dass**
das zweite Scherenarmelement (6) ein einstückiges viertes Hebelelement (60) umfasst, welches gegenüber dem Oberteil (2) um eine erste Achse (A1) und gegenüber dem Unterteil (3) um eine zweite Achse (A2) schwenkbar gelagert ist, wobei das zweite Scherenarmelement (6) zwischen der ersten Achse (A1) und der zweiten Achse (A2) frei von Drehgelenken und in sich starr ausgestaltet ist und direkt das Unterteil (3) mit dem Oberteil (2) verbindet, wobei die Verbindungen des Scherengestells (4) zum Oberteil (2) und zum Unterteil (3) jeweils frei von translatorischen Freiheitsgraden sind.

2. Fahrzeugsitz (1) nach Anspruch 1,
**dadurch gekennzeichnet, dass**
in Bezug auf eine Längsrichtung (1x) des Fahrzeugsitzes (1) die dritte Achse (A3) und die zweite Achse (A2) an einem vorderen Ende (10) des Fahrzeugsitzes (1) angeordnet sind.

3. Fahrzeugsitz (1) nach einem der vorhergehenden Ansprüche,
**dadurch gekennzeichnet, dass**
das vierte Hebelelement (60) länger ist als das zweite Hebelelement (52) und/oder dass das zweite Hebelelement (52) länger ist als das erste Hebelelement (51) und/oder dass das zweite Hebelelement (52) länger ist als das dritte Hebelelement (53).

4. Fahrzeugsitz (1) nach einem der vorhergehenden Ansprüche,
**dadurch gekennzeichnet, dass**
ein erster Abstand (D1) zwischen der dritten Achse (A3) und der fünften Achse (A5) identisch ist zu einem zweiten Abstand (D2) zwischen der vierten Achse (A4) und der sechsten Achse (A6).

5. Fahrzeugsitz (1) nach einem der vorhergehenden Ansprüche,
**dadurch gekennzeichnet, dass**
ein dritter Abstand (D3) zwischen der dritten Achse (A3) und der vierten Achse (A4) kleiner ist als ein vierter Abstand (D4) zwischen der ersten Achse (A1) und der zweiten Achse (A2).

6. Fahrzeugsitz (1) nach einem der vorhergehenden Ansprüche,
**dadurch gekennzeichnet, dass**
in Bezug auf eine Höhenrichtung (1z) des Fahrzeugsitzes (1) eine Position der ersten Achse (A1) identisch zu einer Position der dritten Achse (A3) und/oder eine Position der zweiten Achse (A2) identisch zu einer Position der vierten Achse (A4) ist.

7. Fahrzeugsitz (1) nach einem der vorhergehenden Ansprüche,
**dadurch gekennzeichnet, dass**
eine Relativposition der dritten Achse (A3), der vierten Achse (A4), der fünften Achse (A5) und/oder der sechsten Achse (A6) jeweils zur gemeinsamen Achse (7) in Längsrichtung (1x) und/oder in Höhenrichtung (1z) des Fahrzeugsitzes (1) verstellbar ist.

8. Fahrzeugsitz (1) nach einem der vorhergehenden Ansprüche,
**dadurch gekennzeichnet, dass**
in Bezug auf die Längsrichtung (1x) des Fahrzeugsitzes (1) eine Position der ersten Achse (A1) unterschiedlich zu einer Position der vierten Achse (A4) und/oder eine Position der dritten Achse (A3) unterschiedlich zu einer Position der zweiten Achse (A2) ist.

9. Fahrzeugsitz (1) nach einem der vorhergehenden Ansprüche,
**dadurch gekennzeichnet, dass**
ein fünfter Abstand (D5) zwischen der fünften Achse (A5) und der gemeinsamen Achse (7) identisch ist zu einem sechsten Abstand (D6) zwischen der sechsten Achse (A6) und der gemeinsamen Achse (7).

10. Fahrzeugsitz (1) nach einem der vorhergehenden Ansprüche,
**dadurch gekennzeichnet, dass**
ein siebter Abstand (D7) zwischen der ersten Achse (A1) und der gemeinsamen Achse (7) identisch ist zu einem achten Abstand (D8) zwischen der zweiten Achse (A2) und der gemeinsamen Achse (7).

## Claims

1. Vehicle seat (1) having an upper part (2) which is height-adjustably mounted with respect to a lower part (3) by means of at least one scissor frame (4), wherein the scissor frame (4) comprises a first scissor arm member (5) and a second scissor arm member (6) which are pivotably mounted about a common axis (7),
wherein
the first scissor arm member (5) comprises a first (51), a second (52) and a third lever member (53) which are series-connected, wherein the first lever member (51) is pivotally mounted with respect to the upper part (2) about a third axis (A3), and wherein the third lever member (53) is pivotally mounted with respect to the lower part (3) about a fourth axis (A4), wherein the second lever member (52) is pivotally mounted about the common axis (7) and is rotationally connected to the first lever member (51) by means of a fifth axis (A5) and rotationally connected to the third lever member (53) by means of a sixth axis (A6)
**characterised in that**
the second scissor arm member (6) comprises an integral fourth lever member (60) which is pivotally mounted relative to the upper part (2) about a first axis (A1) and relative to the lower part (3) about a second axis (A2), wherein the second scissor arm member (6) between the first axis (A1) and the second axis (A2) is free of pivot joints and is rigid in itself and directly connects the lower part (3) to the upper part (2), wherein the connections of the scissor frame (4) to the upper part (2) and to the lower part (3) are respectively free of translational degrees of freedom.

2. Vehicle seat (1) according to claim 1,
**characterised in that**
in relation to a longitudinal direction (1x) of the vehicle seat (1), the third axis (A3) and the second axis (A2) are arranged at a front end (10) of the vehicle seat (1).

3. Vehicle seat (1) according to any of the preceding claims,
**characterised in that**
the fourth lever member (60) is longer than the second lever member (52) and/or that the second lever member (52) is longer than the first lever member (51) and/or that the second lever member (52) is longer than the third lever member (53).

4. Vehicle seat (1) according to any of the preceding claims,
**characterised in that**
a first distance (D1) between the third axis (A3) and the fifth axis (A5) is identical to a second distance (D2) between the fourth axis (A4) and the sixth axis (A6).

5. Vehicle seat (1) according to any of the preceding claims,
**characterised in that**
a third distance (D3) between the third axis (A3) and the fourth axis (A4) is smaller than a fourth distance (D4) between the first axis (A1) and the second axis (A2).

6. Vehicle seat (1) according to any of the preceding claims,
**characterised in that**
in relation to a height direction (1z) of the vehicle seat (1), a location of the first axis (A1) is identical to a location of the third axis (A3) and/or a location of the second axis (A2) is identical to a location of the fourth axis (A4).

7. Vehicle seat (1) according to any of the preceding claims,
**characterised in that**
a relative position of the third axis (A3), the fourth axis (A4), the fifth axis (A5) and/or the sixth axis (A6) is respectively adjustable to the common axis (7) in longitudinal direction (1x) and/or in height direction (1z) of the vehicle seat (1).

8. Vehicle seat (1) according to any of the preceding claims,
**characterised in that**
in relation to the longitudinal direction (1x) of the vehicle seat (1), a location of the first axis (A1) is different from a location of the fourth axis (A4) and/or a location of the third axis (A3) is different from a location of the second axis (A2).

9. Vehicle seat (1) according to any of the preceding claims,
**characterised in that**
a fifth distance (D5) between the fifth axis (A5) and the common axis (7) is identical to a sixth distance (D6) between the sixth axis (A6) and the common axis (7).

10. Vehicle seat (1) according to any of the preceding claims,
**characterised in that**
a seventh distance (D7) between the first axis (A1) and the common axis (7) is identical to an eighth distance (D8) between the second axis (A2) and the common axis (7).

## Revendications

1. Siège de véhicule (1) comportant une partie supérieure (2), laquelle est montée de manière réglable en hauteur par rapport à une partie inférieure (3) au moyen d'au moins un châssis à ciseaux (4), le châssis à ciseaux (4) comportant un premier élément bras de ciseaux (5) et un second élément bras de ciseaux (6), lesquels sont montés de manière pivotante autour d'un axe commun (7),
le premier élément bras de ciseaux (5) comportant un premier (51), un deuxième (52) et un troisième élément levier (53), lesquels sont montés en série les uns derrière les autres, le premier élément levier (51) étant monté de manière pivotante autour d'un troisième axe (A3) par rapport à la partie supérieure (2), et le troisième élément levier (53) étant monté de manière pivotante autour d'un quatrième axe (A4) par rapport à la partie inférieure (3), le deuxième élément levier (52) étant monté de manière pivotante autour de l'axe commun (7) de même qu'étant relié de manière rotative au premier élément levier (51) au moyen d'un cinquième axe (A5) et de manière rotative au troisième élément levier (53) au moyen d'un sixième axe (A6)
**caractérisé par le fait que**
le second élément bras de ciseaux (6) comporte un quatrième élément levier (60) d'une seule pièce, lequel est monté de manière à pouvoir pivoter autour d'un premier axe (A1) par rapport à la partie supérieure (2) et autour d'un deuxième axe (A2) par rapport à la partie inférieure (3), le second élément bras de ciseaux (6) entre le premier axe (A1) et le deuxième axe (A2) étant conçu sans articulations tournantes et rigide en soi et reliant directement la partie inférieure (3) avec la partie supérieure (2), les liaisons du châssis à ciseaux (4) à la partie supérieure (2) et à la partie inférieure (3) étant chacune sans degrés de liberté en translation.

2. Siège de véhicule (1) selon la revendication 1,
**caractérisé par le fait que**,
par rapport à une direction longitudinale (1x) du siège de véhicule (1), le troisième axe (A3) et le deuxième axe (A2) sont disposés à une extrémité avant (10) du siège de véhicule (1).

3. Siège de véhicule (1) selon l'une des revendications précédentes,
**caractérisé par le fait que**
le quatrième élément levier (60) est plus long que le deuxième élément levier (52) et/ou **par le fait que** le deuxième élément levier (52) est plus long que le premier élément levier (51) et/ou **par le fait que** le deuxième élément levier (52) est plus long que le troisième élément levier (53).

4. Siège de véhicule (1) selon l'une des revendications précédentes,
**caractérisé par le fait qu'**
une première distance (D1) entre le troisième axe (A3) et le cinquième axe (A5) est identique à une deuxième distance (D2) entre le quatrième axe (A4) et le sixième axe (A6).

5. Siège de véhicule (1) selon l'une des revendications précédentes,
**caractérisé par le fait qu'**
une troisième distance (D3) entre le troisième axe (A3) et le quatrième axe (A4) est inférieure à une quatrième distance (D4) entre le premier axe (A1) et le deuxième axe (A2).

6. Siège de véhicule (1) selon l'une des revendications précédentes,
**caractérisé par le fait que**,
par rapport à une direction de la hauteur (1z) du siège de véhicule (1), une position du premier axe (A1) est identique à une position du troisième axe (A3) et/ou une position du deuxième axe (A2) est identique à une position du quatrième axe (A4).

7. Siège de véhicule (1) selon l'une des revendications précédentes,
**caractérisé par le fait qu'**
une position relative du troisième axe (A3), du quatrième axe (A4), du cinquième axe (A5) et/ou du sixième axe (A6) est réglable respectivement par rapport à l'axe commun (7) dans la direction longitudinale (1x) et/ou dans la direction de la hauteur (1z) du siège de véhicule (1).

8. Siège de véhicule (1) selon l'une des revendications précédentes,
**caractérisé par le fait que**,
par rapport à la direction longitudinale (1x) du siège de véhicule (1), une position du premier axe (A1) est différente d'une position du quatrième axe (A4) et/ou une position du troisième axe (A3) est différente d'une position du deuxième axe (A2).

9. Siège de véhicule (1) selon l'une des revendications précédentes,
**caractérisé par le fait qu'**
une cinquième distance (D5) entre le cinquième axe (A5) et l'axe commun (7) est identique à une sixième distance (D6) entre le sixième axe (A6) et l'axe commun (7).

10. Siège de véhicule (1) selon l'une des revendications précédentes,
**caractérisé par le fait qu'**
une septième distance (D7) entre le premier axe (A1) et l'axe commun (7) est identique à une huitième distance (D8) entre le deuxième axe (A2) et l'axe commun (7).
